# EUROPÄISCHE PATENTANMELDUNG

(11) **EP 4 000 791 A2**
(43) Veröffentlichungstag der Anmeldung: **25.05.2022**
(21) Anmeldenummer: 21207243.3
(22) Anmeldetag: 09.11.2021
(51) Int. Cl.: B23K 26/14, B23K 26/20

(54) **VORRICHTUNG UND VERFAHREN ZUM VERBINDEN VON BAUTEILEN**

(30) Priorität: 18.11.2020 DE 102020214505
(71) Anmelder: Robert Bosch GmbH, 70442 Stuttgart (DE)
(72) Erfinder: Bantel, Christoph, 71254 Ditzingen (DE)

(57) **Zusammenfassung**

Die vorgestellte Erfindung betrifft eine Verbindungsvorrichtung (100) zum Verbinden von Bauteilen. Die Verbindungsvorrichtung (100) umfasst einen Laser (101) und eine Spülvorrichtung (103) zum Spülen eines Arbeitsbereichs (113) des Lasers (101) mit Schutzgas, wobei der Laser (101) dazu konfiguriert ist, einen grünen Laserstrahl zu emittieren.

Ferner umfasst die vorgestellte Erfindung ein Verbindungsverfahren (200) und eine Spülvorrichtung (103).

## Beschreibung

### Stand der Technik

Es sind Laserbondsysteme bekannt, bei denen ein infraroter Faserlaser zum Einbringen von Energie in einen Arbeitsbereich verwendet wird.

Bei einem Laserbondprozess entsteht in der Regel Schmauch, der einen Laser so stark beeinträchtigen kann, dass der Laserbondprozess abbricht, da nicht ausreichend Energie im Arbeitsbereich ankommt.

Weiterhin ist es bekannt, Schmauch, der beim Einsatz eines infraroten Faserlasers entsteht, mittels einer Gasspülung aus einem Laserbondsystem auszublasen.

### Offenbarung der Erfindung

Im Rahmen der vorgestellten Erfindung werden eine Verbindungsvorrichtung, ein Verbindungsverfahren und eine Spülvorrichtung mit den Merkmalen der jeweiligen unabhängigen Ansprüche vorgestellt. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Verbindungsvorrichtung beschrieben sind, selbstverständlich auch im Zusammenhang mit dem erfindungsgemäßen Verbindungsverfahren und der erfindungsgemäßen Spülvorrichtung und jeweils umgekehrt, sodass bezüglich der Offenbarung zu den einzelnen Erfindungsaspekten stets wechselseitig Bezug genommen wird bzw. Bezug genommen werden kann.

Die vorgestellte Erfindung dient dazu, eine robuste und standfeste Laserbondvorrichtung bereitzustellen. Insbesondere dient die vorgestellte Erfindung dazu, Poren und Mikrospritzer beim Laserstrahlschweißen von bspw. Kupfer zu minimieren und eine oxydfreie Schweißnaht bereitzustellen.

Es wird somit in einem ersten Aspekt der vorgestellten Erfindung eine Verbindungsvorrichtung zum Verbinden von Bauteilen vorgestellt. Die Verbindungsvorrichtung umfasst einen Laser und eine Spülvorrichtung zum Spülen eines Arbeitsbereichs des Lasers mit Schutzgas, wobei der Laser dazu konfiguriert ist, grüne Laserstrahlen zu emittieren.

Unter einem Arbeitsbereich eines Lasers ist im Kontext der vorgestellten Erfindung ein Bereich zu verstehen, der durch einen Laser erwärmt, insbesondere aufgeschmolzen wird, um jeweilige in dem Arbeitsbereich befindliche Materialien miteinander zu verbinden, insbesondere zu verschweißen.

Die vorgestellte Erfindung basiert auf dem Prinzip, dass ein Schutzgas mittels einer Spülvorrichtung auf einen Arbeitsbereich eines Lasers geblasen wird, um in dem Arbeitsbereich eine Schutzatmosphäre zu erzeugen, die eine Umgebungsatmosphäre, wie bspw. Luft und darin enthaltenen Sauerstoff aus dem Arbeitsbereich bestmöglich verdrängt, d.h. den Arbeitsbereich "spült".

Ferner basiert die vorgestellte Erfindung auf der Verwendung eines grünen Lasers, also eines Lasers, der grüne Laserstrahlen emittiert. Es hat sich in Versuchen überraschend gezeigt, dass ein grüner Laser gegenüber einem Infrarotlaser deutlich toleranter gegenüber Schmauch ist, sodass ein grüner Laser höhere Schmauchkonzentrationen toleriert und weniger Prozessabbrüche und weniger Spritzer bedingt als ein Infrarotlaser.

Im Gegensatz zu Laserbondwerkzeugen für Laserbondprozesse mit infraroter Strahlquelle, ermöglicht die erfindungsgemäß vorgesehene Spülvorrichtung eine Zufuhr von Schutzgas nicht zum Spülen der Verbindungsvorrichtung von Schmauch, sondern zur Schutzgasabdeckung eines Arbeitsbereichs des grünen Lasers. Aufgrund der physikalischen Eigenschaften des grünen Lasers ermöglicht es die Kombination einer Gasspülung mit einem grünen Laser eine zumindest bereichsweise geschlossene Spülvorrichtung zu verwenden und, dadurch bedingt, das Erzeugen von Mikrospritzern bei einem Laserbondprozess zu minimieren.

Es kann vorgesehen sein, dass der Laser der vorgestellten Verbindungsvorrichtung dazu konfiguriert ist, Laserstrahlen im Wellenbereich zwischen 490nm und 575nm, insbesondere von 532nm oder 515nm zu emittieren.

Laserstrahlen mit einer Wellenlänge von 532nm, 520nm oder 515nm, die bspw. mittels eines Festkörperlasers erzeugt werden, haben sich aufgrund ihrer kurzen Wellenlänge als besonders tolerant gegenüber Schmauch im Strahlengang erwiesen, sodass diese auch bei einer hohen Schmauchbelastung im Strahlengang einen kontinuierlichen bzw. für einen Verbindungsprozess ausreichend hohen Energieeintrag in den Arbeitsbereich gewährleisten.

Es kann weiterhin vorgesehen sein, dass die Spülvorrichtung eine erste Öffnung zum Einleiten von Schutzgas in die Spülvorrichtung und eine zweite Öffnung zum Ausleiten des Schutzgases in den Arbeitsbereich umfasst, wobei ein Bereich zwischen der ersten Öffnung und der zweiten Öffnung zumindest bereichsweise geschlossen bzw. verschlossen ist, so dass ein zumindest bereichsweise an vier Seiten umschlossener Kanal bereitgestellt wird.

Durch eine geschlossene Führung bzw. einen zumindest tlw. geschlossenen Bereich zum Führen von Schutzgas aus einer Eintrittsöffnung zu einer Austrittsöffnung der erfindungsgemäß vorgesehenen Spülvorrichtung kann ein Eintritt von Umgebungsatmosphäre bzw. ein "Mitreisen" von Umgebungsatmosphäre durch das Schutzgas in den Arbeitsbereich minimiert und ein Anteil von Schutzgas im Arbeitsbereich maximiert werden.

Insbesondere kann ein Bereich zum Führen von Schutzgas aus einer Eintrittsöffnung zu einer Austrittsöffnung der erfindungsgemäß vorgesehenen Spülvorrichtung einen Kanal bilden, der insbesondere an vier Seiten geschlossen ist. Insbesondere in Kombination mit dem erfindungsgemäß vorgesehenen grünen Laser kann ein geschlossener Bereich ein Eindringen einer Umgebungsatmosphäre in einen Arbeitsbereich des Lasers verhindern, da der grüne Laser eine ggf. durch den geschlossenen Bereich erhöhte Schmauchkonzentration sehr viel besser toleriert als ein Infrarotlaser.

Es kann weiterhin vorgesehen sein, dass die Spülvorrichtung in dem Bereich zwischen der ersten Öffnung und der zweiten Öffnung eine Deckschicht umfasst, die mindestens eine Ausnehmung umfasst.

Durch mindestens eine Ausnehmung im Bereich zum Führen von Schutzgas aus einer Eintrittsöffnung zu einer Austrittsöffnung der vorgestellten Verbindungsvorrichtung, die bspw. zwischen 10% und 25% einer Gesamtfläche des Bereichs zum Führen des Schutzgases einnehmen kann, wird ein Verdrängen von Schmauch in eine Umgebungsatmosphäre und entsprechend eine Reduktion von Schmauch im Arbeitsbereich des Lasers ermöglicht.

Es kann weiterhin vorgesehen sein, dass die Spülvorrichtung zumindest über der zweiten Öffnung zu vier Seiten hin geschlossen ist.

Durch eine abgeschossene Abdeckung der zweiten Öffnung, die bspw. eine Einströmdüse zum Einleiten von Schutzgas in einen Arbeitsbereich des Lasers bildet, wird ein Eindringen von Umgebungsatmosphäre in den Arbeitsbereich minimiert.

Es kann weiterhin vorgesehen sein, dass die Spülvorrichtung eine dritte Öffnung zum zusätzlichen Einleiten von Schutzgas umfasst, wobei die dritte Öffnung zwischen der ersten Öffnung und der zweiten Öffnung angeordnet ist.

Durch eine zusätzliche Öffnung zum Einleiten von Schutzgas in die Spülvorrichtung der vorgestellten Verbindungsvorrichtung kann ein zweistufiger Gasspülungsprozess ermöglicht werden, bei dem durch die erste Öffnung in einem ersten Teilbereich der Spülvorrichtung eine erste Menge Schutzgas in die Spülvorrichtung eingeleitet wird und durch die zusätzliche Öffnung in einem zweiten Teilbereich der Spülvorrichtung eine zusätzliche zweite Menge Schutzgas in die Spülvorrichtung eingeleitet wird. Dabei kann die zusätzliche Öffnung bspw. direkt im Arbeitsbereich oder wenige Millimeter von dem Arbeitsbereich entfernt angeordnet sein, wohingegen die erste Öffnung einige Centimeter von dem Arbeitsbereich entfernt angeordnet sein kann.

Durch eine Kombination zweier Öffnungen zum Einleiten von Schutzgas in die erfindungsgemäß vorgesehene Spülvorrichtung können jeweilige in die jeweiligen Öffnungen eingeleitete Teilmengen von Schutzgas derart bereitgestellt werden, dass Turbulenzen in einem Volumenstrom des Schutzgases minimiert werden und ein "Mitreißen" von Umgebungsatmosphäre minimiert wird. Entsprechend bedingen zwei Öffnungen zum Einleiten von Schutzgas eine im Wesentlichen laminare Strömung des Schutzgases zum Arbeitsbereich.

Insbesondere wirkt eine durch die erste Öffnung bereitgestellte Teilmenge an Schutzgas als Trennschicht bzw. Schutzhülle zwischen einer Umgebungsluft und einer durch die dritte Öffnung bereitgestellten Teilmenge an Schutzgas.

Es kann weiterhin vorgesehen sein, dass an der ersten Öffnung und an der dritten Öffnung Leitvorrichtungen angeordnet sind, die durch die Spülvorrichtung strömendes Schutzgas auf einen Arbeitsbereich des Lasers leiten.

Mittels Leitvorrichtungen, wie bspw. Leitblechen oder einer speziellen Aufnahme, die eine Düse zum Einbringen von Schutzgas in einer vorgegebenen Ausrichtung fixiert, kann ein Strom an Schutzgas auf einem vorgegebenen Strömungspfad geleitet werden. Dabei können die Leitvorrichtungen bspw. derart geformt sein, dass Turbulenzen in einem Strom an Schutzgas minimiert und laminare Anteile in dem Strom an Schutzgas maximiert werden. Bspw. kann eine Leitvorrichtung ein Strömungsgitter sein.

Es kann weiterhin vorgesehen sein, dass die Spülvorrichtung zumindest bereichsweise mit einer Schutzbeschichtung überzogen ist.

Durch eine Schutzbeschichtung, die bspw. Keramik und/oder Wolfram und/oder Titan umfasst, kann ein Anhaften von während eines Verbindungsprozesses verteilten glühenden Partikeln an der Verbindungsvorrichtung minimiert und eine Standzeit der Verbindungsvorrichtung maximiert werden.

Insbesondere kann durch eine Schutzbeschichtung der erfindungsgemäßen Verbindungsvorrichtung eine Verbindungskraft, mit der jeweilige Partikel an der Verbindungsvorrichtung haften, minimiert werden, sodass die Partikel durch einen Schutzgasstrom von der Verbindungsvorrichtung losgelöst und aus der Verbindungsvorrichtung ausgetragen werden können.

In einem zweiten Aspekt betrifft die vorgestellte Erfindung ein Verbindungsverfahren zum Verbinden von Bauteilen unter Verwendung einer möglichen Ausgestaltung der vorgestellten Verbindungsvorrichtung. Das Verbindungsverfahren umfasst einen Bestrahlungsschritt zum Bestrahlen eines Arbeitsbereichs des Lasers mit einem grünen Laserstrahl und einen ersten Begasungsschritt, bei dem durch die erste Öffnung ein Schutzgas in die Spülvorrichtung und auf einen Arbeitsbereich des Laserstrahls geleitet wird.

Das vorgestellte Verbindungsverfahren dient insbesondere zum Betrieb der vorgestellten Verbindungsvorrichtung.

Durch ein Leiten von Schutzgas auf den Arbeitsbereich des Lasers bzw. des Laserstrahls wird eine Konzentration von Sauerstoff in dem Arbeitsbereich minimiert und eine insbesondere oxidfreie Schweißnaht ermöglicht.

Es kann vorgesehen sein, dass in einem zweiten Begasungsschritt durch die dritte Öffnung zusätzliches Schutzgas in die Spülvorrichtung und auf den Arbeitsberiech geleitet wird.

Durch eine zweistufige Einleitung von Schutzgas wird ein Mitreißen von Luft und darin enthaltenem Sauerstoff beim Strömen des Schutzgases auf den Arbeitsbereich minimiert, da in einer ersten Stufe über die erste Öffnung eingeleitetes Schutzgas als Schutzhülle bzw. Trennschicht gegenüber in der Spülvorrichtung strömenden Luft wirkt und in der zweite Stufe bzw. durch die dritte Öffnung eingeleitetes Schutzgas ohne Kontakt zu der in der Spülvorrichtung strömenden Luft auf den Arbeitsbereich geleitet werden kann.

Es kann weiterhin vorgesehen sein, dass bei dem ersten Begasungsschritt und/oder dem zweiten Begasungsschritt Schutzgas mit einem Druck zwischen 0,lbar und 1,5bar in die Spülvorrichtung eingeleitet wird.

Ein Überdruck von in die vorgestellte Verbindungsvorrichtung eingeleitetem Schutzgas zwischen 0,lbar und l,5bar, insbesondere zwischen 0,5bar und 1bar, hat sich überraschenderweise als besonders geeignet zum Minimieren von Porenbildung und Verschmutzungen der Verbindungsvorrichtung erwiesen. Zusätzlich zu einem Druck kann auch eine Durchflussrate bzw. ein Volumenstrom von eingeleitetem Schutzgas derart eingestellt werden, dass metallisch blanke bzw. oxydfreie Nahtoberraupen

Es kann weiterhin vorgesehen sein, dass als Schutzgas Argon oder Stickstoff verwendet wird.

Sowohl Stickstoff als auch Argon haben sich in Versuchen überraschendweise als besonders geeignet zum Minimieren von Verunreinigungen der vorgestellten Verbindungsvorrichtung beim Durchführen des vorgestellten Verbindungsverfahrens erwiesen. Alternativ ist auch die Verwendung von inerten Gasen denkbar, die eine Reaktion eines bearbeiteten Materials mit der Atmosphäre verhindern.

In einem dritten Aspekt betrifft die vorgestellte Erfindung eine Spülvorrichtung zum Begasen eines Arbeitsbereichs eines grünen Lasers mit Schutzgas. Die Spülvorrichtung umfasst einen Grundkörper mit einem Kanal zum Leiten eines Laserstrahls des Lasers, eine erste Öffnung in dem Kanal zum Einleiten von Schutzgas und eine zweite Öffnung in dem Kanal zum Spülen des Arbeitsbereichs des Lasers mittels durch die erste Öffnung eingeleitetem Schutzgas.

Die vorgestellte Spülvorrichtung dient insbesondere zur Verwendung in einer möglichen Ausführungsform der vorgestellten Verbindungsvorrichtung.

Die vorgestellte Spülvorrichtung dient zum Beströmen eines Arbeitsbereichs eines Lasers mit Schutzgas, um insbesondere oxidfreie Verbindungsnähte zu ermöglichen.

Es kann vorgesehen sein, dass der Kanal im Bereich zwischen der ersten Öffnung und der zweiten Öffnung zumindest bereichsweise geschlossen ist.

Ein geschlossener Bereich des Kanals der vorgestellten Spülvorrichtung ermöglicht eine Abschirmung gegenüber einer Umgebungsatmosphäre und entsprechend ein kontrolliertes Verdrängen von Sauerstoff aus der Spülvorrichtung und entsprechend aus einem Arbeitsbereich eines entsprechenden Lasers.

Es kann weiterhin vorgesehen sein, dass die Spülvorrichtung eine dritte Öffnung zum zusätzlichen Einleiten von Schutzgas umfasst, wobei die dritte Öffnung zwischen der ersten Öffnung und der zweiten Öffnung angeordnet ist.

Durch eine dritte Öffnung kann ein zweistufiger Zufuhrprozess zum Zuführen von Schutzgas in die Spülvorrichtung und entsprechend den Arbeitsbereich des entsprechenden Lasers erfolgen. Dies bewirkt, dass ein durch die erste Öffnung bereitgestellter Schutzgasstrom als Schutzschicht zwischen einer Umgebungsluft und einem durch die dritte Öffnung bereitgestellten Schutzgasstrom wirkt, sodass aus der zweiten Öffnung lediglich Schutzgas bzw. Schutzgas mit einem minimalen Sauerstoffanteil ausströmt.

Es kann weiterhin vorgesehen sein, dass die Spülvorrichtung eine erste Versorgungsleitung zum Einleiten von Schutzgas in die erste Öffnung und eine zweite Versorgungsleitung zum Einleiten von Schutzgas in die dritte Öffnung umfasst, wobei die erste Versorgungsleitung und die zweite Versorgungsleitung dazu konfiguriert sind, den Arbeitsbereich des Lasers anzuströmen.

Durch Versorgungsleitungen, die dazu konfiguriert sind, einen Arbeitsbereich eines jeweiligen Lasers anzuströmen, indem diese bspw. mit ihren Düsen bzw. Strömungsausgängen in Richtung des Arbeitsbereichs ausgerichtet sind, kann eine effektive und zumindest tlw. laminar strömende Versorgung des Arbeitsbereichs mit Schutzgas und eine entsprechend effiziente Verdrängung von Sauerstoff aus dem Arbeitsbereich erreicht werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
- Figur 1: eine mögliche Ausgestaltung der vorgestellten Verbindungsvorrichtung,
- Figur 2: eine schematische Darstellung einer möglichen Ausgestaltung des vorgestellten Verbindungsverfahrens.

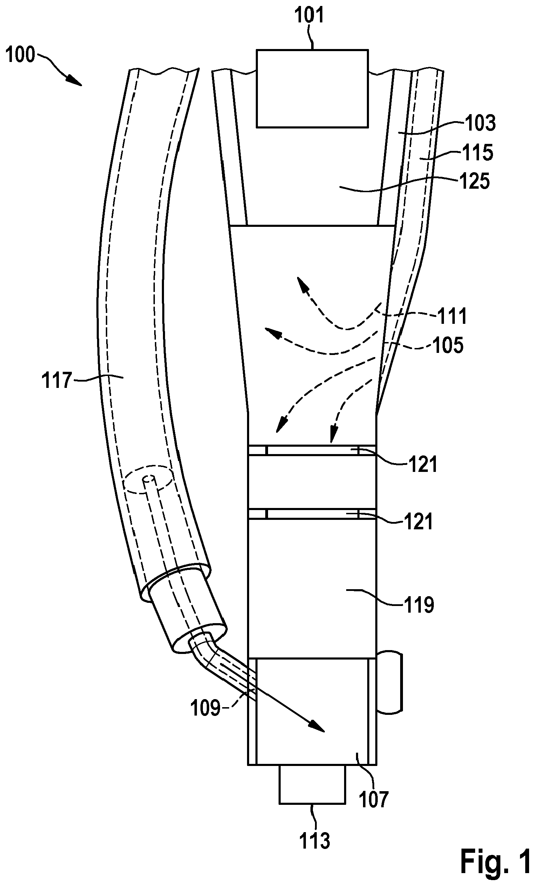

In Figur 1 ist eine Verbindungsvorrichtung 100 dargestellt. Die Verbindungsvorrichtung 100 umfasst einen Laser 101 und eine Spülvorrichtung 103.

Der Laser 101 ist dazu konfiguriert, grüne Laserstrahlen zu emittieren.

Die Spülvorrichtung 103 umfasst einen Kanal 125 mit einer ersten Öffnung 105, einer zweiten Öffnung 107 und einer optionalen dritten Öffnung 109. Die erste Öffnung 105 dient zum Einleiten eines Stroms an Schutzgas in die Spülvorrichtung 103 und auf den Arbeitsbereich 113, wie durch Pfeile 111 angedeutet. Dazu ist eine erste Versorgungsleitung 115 mit der ersten Öffnung 105 verbunden, die Schutzgas aus einem Speicher bereitstellt.

Die zweite Öffnung 107 bildet eine Düse zum Einleiten von Schutzgas und zum Fokussieren von Laserstrahlen in bzw. auf einen Arbeitsbereich 113 des Lasers 101. Eine Einlassöffnung des Kanals 125 und die zweite Öffnung 107 liegen auf einer Achse eines Laserstrahls des Lasers 101.

Die zweite Öffnung 107 kann bspw. als Bohrung oder Langloch in einer die Spülvorrichtung 103 in Richtung des Arbeitsbereichs 113 umhüllenden Bodenplatte sein.

Die dritte Öffnung 109 dient insbesondere zum direkten Einleiten von Schutzgas in den Arbeitsbereich 113. Dazu ist die dritte Öffnung 109 mit einer zweiten Versorgungsleitung 117 verbunden, die Schutzgas aus einem Speicher bereitstellt. Entsprechend ist die dritte Öffnung 109 direkt oder in sehr geringem Abstand von wenigen Millimetern über dem Arbeitsbereich 113 bzw. der zweiten Öffnung 107 angeordnet.

Durch eine zweistufige Einleitung von Schutzgas mittels der ersten Öffnung 105 und der dritten Öffnung 109 kann ein "Mitreißen" von Umgebungsatmosphäre, wie bspw. Luft, durch einen aus der zweiten Öffnung 107 strömenden Schutzgasstrom minimiert werden.

Insbesondere bildet ein durch die erste Öffnung 105 bereitgestellter Schutzgasstroms eine Hülle um einen durch die dritte Öffnung 109 bereitgestellten Schutzgasstrom. Diese Hülle bzw. diese Trennschicht minimiert eine Durchmischung des durch die dritte Öffnung 109 bereitgestellten Schutzgasstroms mit Umgebungsmedium.

Weiterhin wirkt der durch die dritte Öffnung 109 bereitgestellte Schutzgasstrom glättend bzw. führt zu einem laminaren Strömungsverhalten des aus der zweiten Öffnung 107 ausströmenden Schutzgasstroms, sodass auch an der zweiten Öffnung 107 eine Durchmischung mit Umgebungsluft verhindert bzw. minimiert wird.

Vorliegend befindet sich die dritte Öffnung 109 ca. 2 mm bis 3 mm und die erste Öffnung 105 ca. 2 cm bis 3 cm über dem Arbeitsbereich 113 des Lasers 101. Durch die zweitstufige Schutzgaszufuhr über die erste Öffnung 105 und die dritte Öffnung 109 wird eine Bildung von Mikrospritzern bei einer Aktivität des Lasers 101 minimiert und, dadurch bedingt, eine Standzeit der Verbindungsvorrichtung 100 maximiert und eine besonders homogene bzw. porenfreie Verbindung jeweiliger zu verbindender Objekte erreicht.

Vorliegend ist die Spülvorrichtung 103 keilförmig ausgestaltet, sodass sich ein Querschnitt eines Bereichs zum Leiten eines Volumenstroms an Schutzgas durch die Spülvorrichtung 103 sukzessive verringert und der Volumenstrom entsprechend beschleunigt wird. Dies bedeutet, dass die zweite Öffnung 107 als Düse zum Kontrollieren des Volumenstroms wirkt.

Ein Bereich zwischen der ersten Öffnung 105 und der zweiten Öffnung 107 der Verbindungsvorrichtung 100 ist durch eine Deckschicht 119 verschlossen. Entsprechend wird ein Eintrag von Umgebungsatmosphäre in den Kanal 125 durch die Deckschicht 119 minimiert.

Da der Laser 101 grüne Laserstrahlen erzeugt, führt eine durch die Deckschicht 119 ggf. erhöhte Schmauchkonzentration in dem Kanal 125 nicht zu vermehrten Prozessabbrüchen. Vielmehr ist die Verbindungsvorrichtung 100 aufgrund des Lasers 101 sehr tolerant gegenüber dem Auftreten von Schmauch im Arbeitsbereich 113 und hat eine entsprechend hohe Standzeit, da hier eine Schutzgasabdeckung durch bereichsweises Schließen der Spülvorrichtung 103 erreicht werden kann.

Optional umfasst die Deckschicht 119, wie vorliegend dargestellt, Ausnehmungen 121 zum Abführen von Schmauch aus der Spülvorrichtung 103.

Weiterhin ist die Spülvorrichtung 103 zumindest im Bereich zwischen der ersten Öffnung 105 und der dritten Öffnung 109, insbesondere im gesamten Bereich zwischen der ersten Öffnung 105 und der zweiten Öffnung 107, optional auch an einer Unterseite der Spülvorrichtung 103, mit einer Beschichtung 123, wie bspw. einer Keramik, ummantelt. Die Beschichtung 123 hat einen besonders hohen Schmelzpunkt, sodass die Beschichtung 123 einen Grundkörper der Spülvorrichtung 103 vor Beschädigung durch Anhaften von glühenden Materialspritzern schützt. Die Materialspritzer können an der Beschichtung 123 abkühlen, erstarren und schließlich aus der Spülvorrichtung 103 ausgeblasen werden.

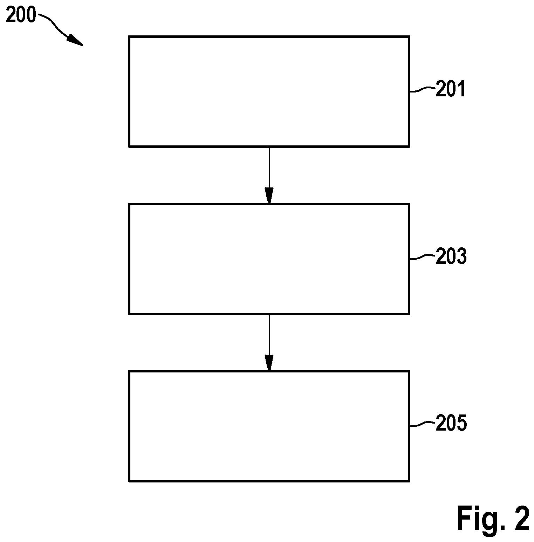

In Figur 2 ist ein Verbindungsverfahren 200 dargestellt. Das Verbindungsverfahren 200 umfasst einen Bestrahlungsschritt 201 zum Bestrahlen eines Arbeitsbereichs mit einem grünen Laserstrahl, der bspw. von der Verbindungsvorrichtung 100 gemäß Figur 1 bereitgestellt wird.

Weiterhin umfasst das Verbindungsverfahren 200 einen ersten Begasungsschritt 203, bei dem durch die erste Öffnung 105 ein Schutzgas in die Spülvorrichtung 103 eingeleitet wird, und einen zweiten Begasungsschritt 205, bei dem durch die dritte Öffnung 109 ein Schutzgas in die Spülvorrichtung 103 eingeleitet wird.

An der ersten Öffnung 105 und der dritten Öffnung 109 kann Schutzgas mit einem Druck zwischen 0,1bar und 1,5bar und einer vorgegebenen Durchflussrate in die Spülvorrichtung 103 eingeleitet werden. Insbesondere kann sich ein Druck, mit dem Schutzgas in die erste Öffnung 105 eingeleitet wird, von einem Druck, mit dem Schutzgas in die dritte Öffnung 109 eingeleitet wird, unterscheiden, sodass ein besonders laminarer Volumenstrom von Schutzgas erzeugt und ein Einbringen von Luft in den Volumenstrom an Schutzgas minimiert wird. Entsprechend kann sich kann sich auch eine Durchflussrate, mit der Schutzgas durch die erste Öffnung 105 eingeleitet wird, von einer Durchflussrate, mit der Schutzgas durch die dritte Öffnung 109 eingeleitet wird, unterscheiden, sodass ein besonders laminarer Volumenstrom von Schutzgas erzeugt und ein Einbringen von Luft in den Volumenstrom an Schutzgas minimiert wird und metallisch blanke bzw. oxydfreie Nahtoberraupen entstehen.

## Patentansprüche

1. Verbindungsvorrichtung (100) zum Verbinden von Bauteilen,
wobei die Verbindungsvorrichtung (100) umfasst:
- einen Laser (101),
- eine Spülvorrichtung (103) zum Spülen eines Arbeitsbereichs (113) des Lasers (101) mit Schutzgas,
wobei der Laser (101) dazu konfiguriert ist, grüne Laserstrahlen zu emittieren.

2. Verbindungsvorrichtung (100) nach Anspruch 1,
**dadurch gekennzeichnet,**
**dass** der Laser (101) dazu konfiguriert ist Laserstrahlen im Wellenbereich zwischen 490nm und 575nm, insbesondere von 532nm oder 515nm, zu emittieren.

3. Verbindungsvorrichtung (100) nach Anspruch 1 oder 2,
**dadurch gekennzeichnet,**
**dass** die Spülvorrichtung (103) eine erste Öffnung (105) zum Einleiten von Schutzgas in die Spülvorrichtung (103) und eine zweite Öffnung (107) zum Ausleiten des Schutzgases in den Arbeitsbereich (113) umfasst, und wobei die Spülvorrichtung (103) im Bereich zwischen der ersten Öffnung (105) und der zweiten Öffnung (107) zumindest bereichsweise geschlossen ist.

4. Verbindungsvorrichtung (100) nach Anspruch 3,
**dadurch gekennzeichnet,**
**dass** die Spülvorrichtung (103) in dem Bereich zwischen der ersten Öffnung (105) und der zweiten Öffnung (107) eine Deckschicht (119) umfasst, die mindestens eine Ausnehmung (121) umfasst.

5. Verbindungsvorrichtung (100) nach Anspruch 3 oder 4,
**dadurch gekennzeichnet,**
**dass** die Spülvorrichtung (103) zumindest an einer Stelle der zweiten Öffnung (107) nach vier Seiten geschlossen ist.

6. Verbindungsvorrichtung (100) nach einem der Ansprüche 3 bis 5,
**dadurch gekennzeichnet,**
**dass** die Spülvorrichtung (103) eine dritte Öffnung (109) zum zusätzlichen Einleiten von Schutzgas umfasst, wobei die dritte Öffnung (109) zwischen der ersten Öffnung (105) und der zweiten Öffnung (107) angeordnet ist.

7. Verbindungsvorrichtung (100) nach Anspruch 6,
**dadurch gekennzeichnet,**
**dass** an der ersten Öffnung (105) und an der dritten Öffnung (109) Leitvorrichtungen angeordnet sind, die durch die Spülvorrichtung (103) strömendes Schutzgas auf den Arbeitsbereich (113) des Lasers (101) leiten.

8. Verbindungsvorrichtung (100) nach einem der voranstehenden Ansprüche, **dadurch gekennzeichnet,**
**dass** die Spülvorrichtung (103) zumindest bereichsweise mit einer Schutzbeschichtung (123) überzogen ist.

9. Verbindungsverfahren (200) zum Verbinden von Bauteilen unter Verwendung einer Verbindungsvorrichtung (100) nach einem der Ansprüche 1 bis 8,
wobei das Verbindungsverfahren (200) umfasst:
- einen Bestrahlungsschritt (201) zum Bestrahlen eines Arbeitsbereichs (113) des Lasers (101) mit einem grünen Laserstrahl,
- einen ersten Begasungsschritt (203), bei dem durch die erste Öffnung (105) ein Schutzgas in die Spülvorrichtung (103) und durch die zweite Öffnung (107) auf einen Arbeitsbereich (113) des Lasers geleitet wird.

10. Verbindungsverfahren nach Anspruch 9,
**dadurch gekennzeichnet,**
**dass** das Verbindungsverfahren einen zweiten Begasungsschritt (205) umfasst, bei dem durch die dritte Öffnung (109) ein Schutzgas in die Spülvorrichtung (103) eingeleitet wird.

11. Spülvorrichtung (103) zum Begasen eines Arbeitsbereichs (113) eines grünen Lasers (101) mit Schutzgas,
wobei die Spülvorrichtung (103) umfasst:
- einen Grundkörper mit einem Kanal (125) zum Leiten eines Laserstrahls des Lasers (101),
- eine erste Öffnung (105) in dem Kanal (125) zum Einleiten von Schutzgas,
- eine zweite Öffnung (109) in dem Kanal (125) zum Spülen des Arbeitsbereichs (113) des Lasers (101) mittels durch die erste Öffnung (105) eingeleitetem Schutzgas.

12. Spülvorrichtung (103) nach Anspruch 11,
**dadurch gekennzeichnet, dass**
der Kanal (125) im Bereich zwischen der ersten Öffnung (105) und der zweiten Öffnung (107) zumindest bereichsweise geschlossen ist.

13. Spülvorrichtung (103) nach Anspruch 11 oder 12,
**dadurch gekennzeichnet, dass**
dass die Spülvorrichtung (103) eine dritte Öffnung (109) zum zusätzlichen Einleiten von Schutzgas umfasst, wobei die dritte Öffnung (109) zwischen der ersten Öffnung (105) und der zweiten Öffnung (107) angeordnet ist.

14. Spülvorrichtung (103) nach Anspruch 13,
**dadurch gekennzeichnet, dass**
die Spülvorrichtung (103) eine erste Versorgungsleitung (115) zum Einleiten von Schutzgas in die erste Öffnung (105) und eine zweite Versorgungsleitung (117) zum Einleiten von Schutzgas in die dritte Öffnung (109) umfasst, wobei die erste Versorgungsleitung (115) und die zweite Versorgungsleitung (117) dazu konfiguriert sind, den Arbeitsbereich (113) des Lasers (101) anzuströmen.
